# EUROPÄISCHE PATENTSCHRIFT

(11) **EP 2 181 944 B1**
(45) Veröffentlichungstag und Bekanntmachung des Hinweises auf die Patenterteilung: **04.07.2012**
(21) Anmeldenummer: 09170846.1
(22) Anmeldetag: 21.09.2009
(51) Int. Cl.: B65G 1/137, B66F 9/075

(54) **Verfahren und Vorrichtung zum Beladen eines Lagerraums mit einem Transportfahrzeug**
Method and device for loading a storage area with a transport vehicle
Procédé et dispositif de chargement d'un espace de stockage à l'aide d'un véhicule de transport

(30) Priorität: 04.11.2008 DE 102008043433
(43) Veröffentlichungstag der Anmeldung: 05.05.2010
(73) Patentinhaber: Robert Bosch GmbH, 70442 Stuttgart (DE)
(72) Erfinder: Belser, Florian, 72379 Hechingen (DE); Biber, Peter, 72070 Tuebingen (DE); Koehler, Markus, 71636 Ludwigsburg (DE); Albert, Amos, 71229 Leonberg (DE); Becker, Ralf, 71701 Schwieberdingen (DE); Zimmermann, Uwe, 71686 Remseck (DE)

(56) Entgegenhaltungen:
- EP-A1- 1 035 046
- DE-U1- 29 708 980
- US-A- 5 006 996

## Beschreibung

### Stand der Technik

Die Erfindung betrifft ein Verfahren zum Beladen eines Laderaums mit einem Transportfahrzeug nach dem Oberbegriff des Anspruchs 1. Weiterhin betrifft die Erfindung eine Vorrichtung zum Beladen eines Laderaums mit einem Transportfahrzeug nach dem Oberbegriff des Anspruchs 5.

Aus DE 10 2004 006 858 A1 ist ein Verfahren zum automatischen oder halbautomatischen Entladen eines lastgefüllten Laderaums mit einem Transportfahrzeug bekannt, wobei die Position mehrerer Ladungen mittels Positionssensoren erfasst wird, eine Ladung in dem Laderaum auf Basis der erfassten Positionsdaten ergriffen und aus dem Laderaum entnommen wird. Bei dem Verfahren wird eine durch das Entladen hervorgerufene Positionsveränderung des Laderaums bestimmt, die Position wenigstens einer weiteren Ladung in dem Laderaum berechnet und unter Verwendung der berechneten Position eine weitere Ladung ergriffen und entnommen. Bei einem Beladevorgang wird eine durch das Beladen hervorgerufene Positionsveränderung des Laderaums bestimmt, eine Position für wenigstens eine weitere Ladung in dem Laderaum berechnet und unter Verwendung der berechneten Position eine weitere Ladung beladen. Dadurch soll dynamischen Umgebungsänderungen im Bereich des Laderaums wirkungsvoll begegnet werden.

Aus DE 297 08 980 U1 ist eine Überwachungsvorrichtung für Flurförderfahrzeuge bekannt. Die Überwachungsvorrichtung in Anordnung an einem Fahrzeug, insbesondere einem Flurförderfahrzeug mit einer Gabel zum Transportieren oder Stapeln von Gegenständen, Lasten oder dergleichen, mit einer Kamera, zum Beispiel Videokamera, zur optischen Erfassung wenigstens eines Umfeldbereichs des Fahrzeugs und einen bevorzugt im Fahrerraum des Fahrzeugs positionierten Monitor zur Wiedergabe der Kamerasignale ist dadurch gekennzeichnet, dass die Gabel, bevorzugt ein freier Endabschnitt der Gabel, eine Ausnehmung oder dergleichen Aufnahme aufweist und die Kamera von der Aufnahme im Wesentlichen vollständig aufgenommen ist.

EP 1035046 A1 zeigt den Betrieb eines automatisierten Regallagers, bei welchem zwar Kennwerte von Ladegut und zu beschickendem Lagerplatz erfasst werden, diese Kennwerte verglichen werden und bei Eignung des Lagerplatzes das Ladegut dort automatisch eingelagert wird.

EP1035046 A1 offenbart ein Verfahren zum Beladen eines Laderaums mit einem Transportfahrzeug und eine Vorrichtung zum Beladen eines Laderaums mit einem Transportfahrzeug nach dem Oberbegriff der Ansprüche 1 und 5.

### Offenbarung der Erfindung

Der Erfindung liegt die Aufgabe zugrunde, ein Verfahren für das Beladen eines Laderaums mit einem Transportfahrzeug zu schaffen, das eine besonders effektive und sichere Beladung eines Laderaums mit einem Transportfahrzeug ermöglicht. Das Verfahren ist besonders vorteilhaft beim Beladen eines nur schlecht einsehbare Lagerplätze umfassenden Hochregallagers mit einem Transportfahrzeug, beispielsweise einem Gabelstapler, einsetzbar.

Diese Aufgabe wird durch das in Anspruch 1 genannte Verfahren gelöst. Die Erfindung geht hierbei von der Erkenntnis aus, dass durch eine präzise Erfassung von spezifischen Kenngrößen eines Lagerplatzes, Erfassung von Kenngrößen eines Ladeguts und Vergleich der erfassten Kenngrößen eine möglichst zeitsparende und sichere Lagerung eines Ladeguts ermöglicht wird. Als Kenngrößen kommen vorzugsweise die Abmessungen des Ladeguts und des Lagerplatzes in Betracht. Optional können auch noch das Gewicht und die Belastbarkeit eines Lagerplatzes als Kenngrößen erfasst werden. Um auch bei von dem Platz des Fahrer nicht einsehbaren Lagerplätzen eine sichere Beschickung mit Ladegut bzw. die Entnahme eines Ladeguts zu ermöglichen, werden die erfassten Kennwerte von Ladegut einerseits und Lagerraum andererseits vorteilhaft in bildhafter Form auf einem Display dargestellt. Vorteilhaft ist die Ladeeinrichtung des Fahrzeugs auch in Abhängigkeit von den erfassten Kennwerten steuerbar.

Diese Aufgabe wird auch durch des in Anspruch 5 genannte Vorrichtung gelöst.

Weitere Vorteile ergeben sich aus den Ansprüchen, der Beschreibung und der Zeichnung.

Ausführungsbeispiele der Erfindung werden im Folgenden unter Bezug auf die Zeichnung näher erläutert. Dabei zeigt:
- Figur 1: die Darstellung eines Hochregallagers mit einem Gabelstapler als Transportfahrzeug für den Transport eines Ladeguts und die Bestü- ckung des Hochregallagers;
- Figur 2: die Seitenansicht eines Transportfahrzeugs mit einem an der Ladeein- richtung angeordneten Sensor;
- Figur 3: in schematischer Darstellung und in Vorderansicht eine teilweise mit Ladegut bestückte Parzelle eines Hochregallagers und ein noch zu posi- tionierendes Ladegut;
- Figur 4: ein Ablaufdiagramm für die Erläuterung eines Lagerungsprozesses.

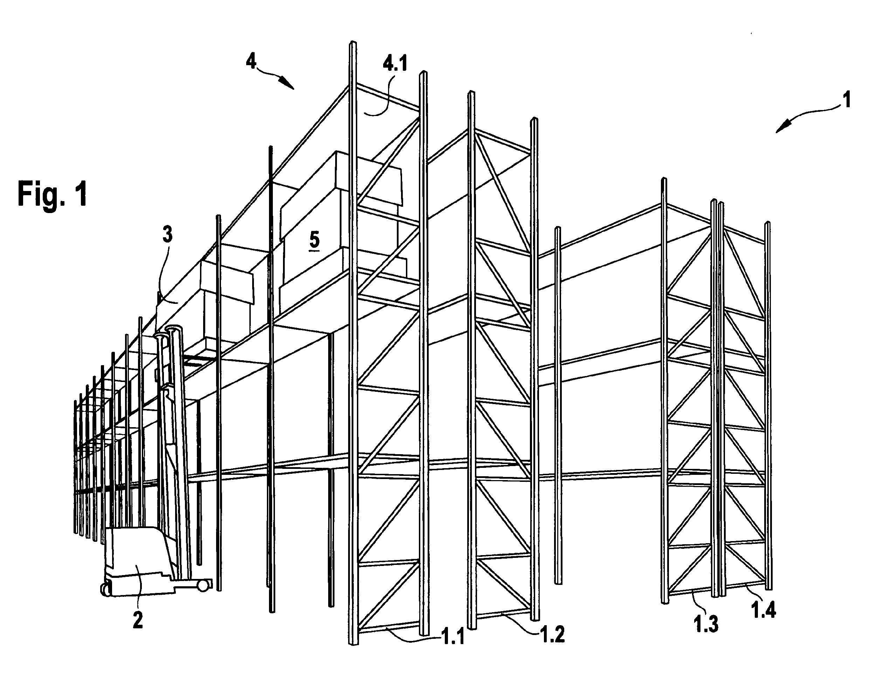

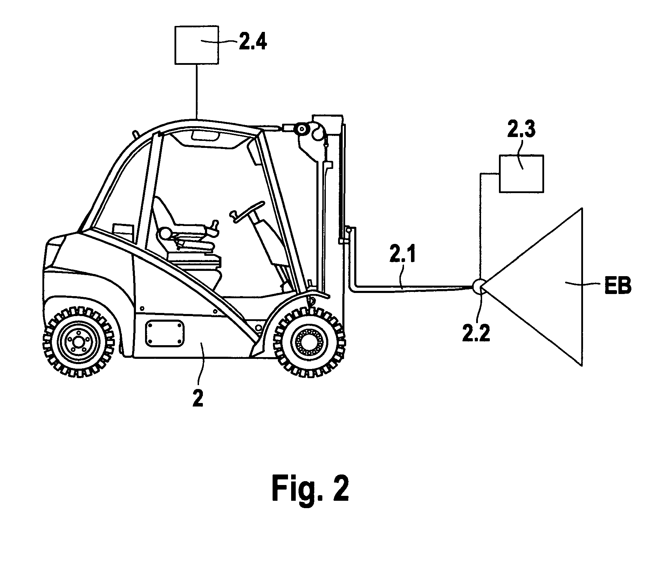

Figur 1 zeigt ein Hochregallager 1 mit beispielsweise einem Gabelstapler 2 als Transportfahrzeug für den Transport eines Ladeguts und die Bestückung des Hochregallagers 1. Selbstverständlich ist die Erfindung auch bei anderen Lagersystemen einsetzbar, die beispielsweise von vollautomatisch gesteuerten Laderobotern bestückt werden. Die Hochregale 1.1, 1.2, 1.3 des Hochregallagers 1 sind beispielsweise durch Regalböden in Parzellen eingeteilt. Beispielhaft sei in Figur 1 in dem Hochregal 1.1 eine Parzelle 4 hervorgehoben. Die Parzelle 4 ist schon teilweise mit Ladegut 5 angefüllt. Ein Teilbereich 4.1 der Parzelle 4 steht noch für die Aufnahme von weiterem Ladegut zur Verfügung. Ein vor dem Hochregal 1.1 stehender Gabelstapler 2 ist gerade damit beschäftigt, ein weiteres Ladegut 3 in eine passende freie Lagerungsposition zu verbringen. Figur 2 zeigt ein Transportfahrzeug, insbesondere einen Gabelstapler 2 mit einem Sensor 2.2, der in dem vorderen Bereich der Ladegabel 2.1 angeordnet ist. Der Erfassungsbereich EB des Sensors 2.2 ist beispielhaft dargestellt. Als Sensor 2.2 eignet sich vorzugsweise ein 3D-Laserscanner oder auch ein Stereo-Videoempfänger mit entsprechenden Auswerteeinrichtungen. Weiterhin ist eine Speichereinrichtung 2.3 für die Speicherung von erfassten Kenndaten des Ladeguts und der Lagerplätze vorgesehen. Schließlich umfasst das Transportfahrzeug (Gabelstapler 2) auch noch ein Display für die bildhafte Darstellung der genannten Kenndaten.

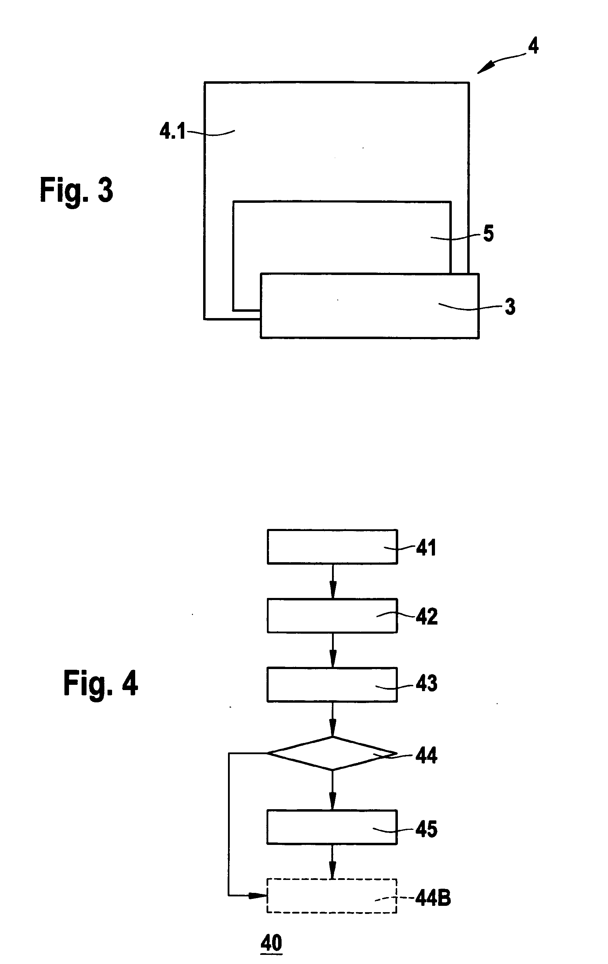

Figur 3 zeigt, in schematischer Darstellung, und in Vorderansicht eine teilweise mit Ladegut 5 bestückte Parzelle 4 eines Hochregals und ein noch einzulagerndes Ladegut 3. Anhand dieser Darstellung soll, in Verbindung mit dem in Figur 4 dargestellten Ablaufdiagramm 40, im Folgenden ein typischer Einlagerungsvorgang beschrieben werden. Zunächst werden (Schritt 41) bei Aufnahme des Ladeguts 3 durch das Transportfahrzeug (Gabelstapler 2) charakteristische Kennwerte des Ladeguts 3 erfasst. Als charakteristische Kennwerte des Ladeguts 3 kommen insbesondere dessen Abmessungen, also Höhe, Länge, Breite und optional auch dessen Gewicht in Betracht. Weitere Kennwerte können sich auf den Inhalt eines verpackten Ladeguts beziehen. Die Abmessungen des Ladeguts 3 können beispielsweise von dem Sensor 2.2 des Transportfahrzeugs erfasst werden. Denkbar ist auch, dass diese Informationen, zusammen mit Angaben über den jeweiligen Inhalt und/oder das Gewicht des Ladeguts 3, über einen auf dem Ladegut 3 angeordneten Barcode oder RFID-Chip übermittelt werden. Im einfachasten Fall können die Abmessungen des Ladeguts 3 auch manuell erfasst und einer Speichereinrichtung des Transportfahrzeugs 2 durch manuelle Eingabe übermittelt werden. Nach Aufnahme des Ladeguts 3 und Erfassung der charakteristischen Kennwerte des Ladeguts 3 fährt das Transportfahrzeug 2 eine möglicherweise passende Lagerposition an und positioniert das Ladegut 3 mit seiner transportseiner Ladeeinrichtung (Gabel 2.1) beispielsweise vor einer erst teilweise mit Ladegut 5 ausgefüllten Parzelle 4 des Hochregals 1.1 (Schritt 42). In dem nächsten Schritt 43 erfasst der Sensor 2.2 den noch verbleibenden Freiraum 4.1 in der schon teilweise beladenen Parzelle 4. Durch Vergleich der Messwerte des Sensors 2.2 mit den zuvor aufgenommenen und gespeicherten Kennwerten des Ladeguts 3 wird dann entschieden, ob der in der erst teilweise beladenen Parzelle 4 noch vorhandene Freiraum 4.1 für die Aufnahme des Ladeguts 3 geeignet ist (Schritt 44). Ist das der Fall, wird das Ladegut 3 in dem Freiraum 4.1 abgelegt und gelagert (Schritt 45). Optional kann in einem zusätzlichen Schritt (Schritt 44B) vor der endgültigen Einlagerung auch noch das Gewicht des Ladeguts 3 berücksichtigt werden. Dies ist besonders wichtig, wenn das zuvor schon in der Parzelle 4 eingelagerte Ladegut 5 besonders druckempfindlich ist oder aber auch eine Höchstbelastung der Parzelle 4 bzw. des Hochregals 1.1 zu beachten sind.

Im Rahmen der Erfindung sind auch weitere Varianten für einen Beladevorgang denkbar. So kann das Transportfahrzeug 2 auch zunächst eine oder mehrere freie Ladepositionen anfahren und den noch zur Verfügung stehenden freien Laderaum messtechnisch erfassen und speichern. In folgenden Schritten wird dann das für eine erfasste Lagerposition passende Ladegut angefahren, aufgenommen und an der geeigneten Lagerposition eingelagert.

Besonders vorteilhaft wird dem Fahrer des Transportfahrzeugs 2 eine Information über den vorhandenen Freiraum 4.1 und den Ablauf des Einlagerungsvorgangs anschaulich auf einem Display dargestellt. Dies erleichtert den Einlagerungsvorgang bei von dem Arbeitsplatz des Fahrers nicht einsehbaren Lagerungsplätzen, insbesondere bei einem Hochregallager.

Gemäß einer vorteilhaften Weiterbildung der Erfindung kann der Beladevorgang auch weitgehend automatisiert werden. Dies ist beispielsweise dadurch möglich, dass unter Berücksichtigung der Messwerte des Sensors 2.2 Aktoren des Transportfahrzeugs gesteuert werden, um die Ladeeinrichtung in eine für die Ablage des Ladeguts 3 optimale Position zu steuern.

Selbstverständlich erleichtert die Erfindung auch die Entnahme eines Ladeguts aus dem Lagerplatz eines Hochregallagers. Dem Fahrer des Transportfahrzeugs 2 wird mittels des Sensors 2.2 eine Information zur Verfügung gestellt, die auch bei fehlender Sicht auf den Lagerplatz ein exaktes Anfahren der Gabel 2.1 unter das auszulagernde Ladegut und dessen zügige und sichere Entnahme aus dem Regal ermöglicht. Durch die präzise Steuerungsmöglichkeit wird auch das Unfallrisiko stark vermindert.

## Patentansprüche

1. Verfahren zum Beladen eines Laderaums, insbesondere Hochregallager oder dergleichen, mit einem Transportfahrzeug, wobei Kennwerte eines Ladegutes (3) erfasst werden, Kennwerte eines freien, zu beschickenden Lagerplatzes oder Freiraums (4.1) erfasst werden, die jeweils erfassten Kennwerte verglichen werden und bei Festestellung eines für das Ladegut (3) passenden Lagerplatzes der Lagerplatz mit dem Ladegut (3) beschickt wird, wobei als Kennwerte des Ladeguts (3) seine Abmessungen erfasst werden, und wobei als Kennwerte des Lagerplatzes seine Abmessungen erfasst werden, **dadurch gekennzeichnet, dass** die Abmessungen des zu beschickenden Lagerplatzes (4.1) und die Position des einzulagernden Ladegutes (3) in Bezug auf den Lagerplatz für den Fahrer des Transportfahrzeugs auf einem Display dargestellt werden.

2. Verfahren nach einem der vorhergehenden Ansprüche, **dadurch gekennzeichnet, dass** als weiterer Kennwert des Ladeguts (3) optional sein Gewicht erfasst wird.

3. Verfahren nach einem der vorhergehenden Ansprüche, **dadurch gekennzeichnet, dass** als weiterer Kennwert des Lagerplatzes oder Freiraums (4.1) die Belastbarkeit des Lagerplatzes erfasst wird.

4. Verfahren nach einem der vorhergehenden Ansprüche, **dadurch gekennzeichnet, dass** Messwerte eines Sensors (2.2) des Transportfahrzeugs (2) für eine automatische Steuerung einer Ladeeinrichtung oder Gabel (2.1) des Transportfahrzeugs (2) verwendet werden.

5. Vorrichtung für das Beladen eines Laderaums, insbesondere Hochregallager oder dergleichen, mit einem Transportfahrzeug (2), das einen mit der Ladeeinrichtung (2.1) des Transportfahrzeugs verbundenen Sensor (2.2) für die Erfassung von in dem Bereich der Ladeeinrichtung (2.1) vorhandenen Objekten aufweist, **dadurch gekennzeichnet, dass** das Transportfahrzeug (2) eine Speichereinrichtung (2.3) für die Speicherung von Kenndaten eines Ladeguts und für die Speicherung von Kenndaten eines Lagerplatzes (4.1) oder Freiraums umfasst, mit einem Display, in welchem die Abmessungen des zu beschickenden Lagerplatzes (4.1) und die Position des einzulagernden Ladegutes (3) in Bezug auf den Lagerplatz (4.1) für den Fahrer des Transportfahrzeugs dargestellt werden.

6. Vorrichtung nach Anspruch 5, **dadurch gekennzeichnet, dass** das Transportfahrzeug (2) ein Display (2.4) für die bildhafte Darstellung von erfassten Kenndaten des Ladeguts (3) und des Lagerplatzes (4.1) umfasst.

7. Vorrichtung nach einem der Ansprüche 5 oder 6, **dadurch gekennzeichnet, dass** die Ladeeinrichtung (2.1) in Abhängigkeit von erfassten Kenndaten des Ladeguts (3) und/oder des Lagerplatzes (4.1) steuerbar ist.

## Claims

1. Method of loading a storage space, in particular a high-bay warehouse or the like, having a transporting vehicle, wherein characteristic values for an article (3) are sensed, characteristic values for a storage location which is free for charging, or a free space (4.1), are sensed, the characteristic values sensed in each case are compared and, in the case of a storage location which is appropriate for the article (3) being ascertained, the storage location is charged with the article (3), wherein the characteristic values sensed for the article (3) are the dimensions thereof, and wherein the characteristic values sensed for the storage location are the dimensions thereof, **characterized in that** the dimensions of the storage location (4.1) which is to be charged and the position, in relation to the storage location, of the article (3) which is to be stored are represented on a display for the driver of the transporting vehicle.

2. Method according to Claim 1, **characterized in that** a further characteristic value sensed for the article (3), as an option, is the weight thereof.

3. Method according to one of the preceding claims, **characterized in that** a further characteristic value sensed for the storage location or free space (4.1) is the loading capability of the storage location.

4. Method according to one of the preceding claims, **characterized in that** measurement values from a sensor (2.2) of the transporting vehicle (2) are used for automatically controlling a loading device or fork (2.1) of the transporting vehicle (2).

5. Apparatus for loading a loading space, in particular a high-bay warehouse or the like, having a transporting vehicle (2) with a sensor (2.2), which is connected to the loading device (2.1) of the transporting vehicle and is intended for sensing objects present in the region of the loading device (2.1), **characterized in that** the transporting vehicle (2) comprises a memory device (2.3) for storing characteristic data for an article and for storing characteristic data for a storage location (4.1) or free space, having a display, in which the dimensions of the storage location (4.1) which is to be charged and the position, in relation to the storage location (4.1), of the article (3) which is to be stored are represented for the driver of the transporting vehicle.

6. Apparatus according to Claim 5, **characterized in that** the transporting vehicle (2) comprises a display (2.4) for the pictorial representation of characteristic data sensed for the article (3) and for the storage location (4.1).

7. Apparatus according to either of Claims 5 or 6, **characterized in that** the loading device (2.1) can be controlled in dependence on characteristic data sensed for the article (3) and/or for the storage location (4.1).

## Revendications

1. Procédé de chargement d'un espace de chargement, en particulier d'un magasin à hauts rayonnages ou similaire, à l'aide d'un véhicule de transport, des valeurs caractéristiques d'une marchandise à charger (3) étant détectées, des valeurs caractéristiques d'un emplacement de stockage libre devant être garni ou d'un espace libre (4.1) étant détectées, les valeurs caractéristiques détectées respectives étant comparées et, lorsque l'on constate qu'un emplacement de stockage est approprié pour la marchandise à charger (3), l'emplacement de stockage étant garni avec la marchandise à charger (3), les dimensions de la marchandise à charger (3) étant détectées en tant que valeurs caractéristiques de cette dernière, et les dimensions de l'emplacement de stockage étant détectées en tant que valeurs caractéristiques de ce dernier, **caractérisé en ce que** les dimensions de l'emplacement de stockage (4.1) devant être garni et la position de la marchandise à charger (3) devant être stockée par rapport à l'emplacement de stockage sont représentées sur un dispositif d'affichage pour le conducteur du véhicule de transport.

2. Procédé selon la revendication 1, **caractérisé en ce que** le poids de la marchandise à charger (3) est détecté de manière optionnelle en tant que valeur caractéristique supplémentaire de cette dernière.

3. Procédé selon l'une quelconque des revendications précédentes, **caractérisé en ce que** la capacité de charge de l'emplacement de stockage est détectée en tant que valeur caractéristique supplémentaire de l'emplacement de stockage ou espace libre (4.1).

4. Procédé selon l'une quelconque des revendications précédentes, **caractérisé en ce que** des valeurs de mesure d'un capteur (2.2) du véhicule de transport (2) sont utilisées pour une commande automatique d'un dispositif de chargement ou d'une fourche (2.1) du véhicule de transport (2).

5. Dispositif pour le chargement d'un espace de chargement, en particulier d'un magasin à hauts rayonnages ou similaire, à l'aide d'un véhicule de transport (2) qui comprend un capteur (2.2), relié au dispositif de chargement (2.1) du véhicule de transport, pour détecter des objets présents dans la région du dispositif de chargement (2.1), **caractérisé en ce que** le véhicule de transport (2) comporte un dispositif de mémorisation (2.3) pour la mise en mémoire de données caractéristiques d'une marchandise à charger et pour la mise en mémoire de données caractéristiques d'un emplacement de stockage (4.1) ou d'un espace libre, et est doté d'un dispositif d'affichage sur lequel sont représentées, pour le conducteur du véhicule de transport, les dimensions de l'emplacement de stockage (4.1) devant être garni et la position de la marchandise à charger (3) devant être stockée par rapport à l'emplacement de stockage (4.1).

6. Dispositif selon la revendication 5, **caractérisé en ce que** le véhicule de transport (2) comporte un dispositif d'affichage (2.4) pour la représentation en images de valeurs caractéristiques détectées de la marchandise à charger (3) et de l'emplacement de stockage (4.1).

7. Dispositif selon la revendication 5 ou 6, **caractérisé en ce que** le dispositif de chargement (2.1) peut être commandé en fonction de valeurs caractéristiques détectées de la marchandise à charger (3) et/ou de l'emplacement de stockage (4.1).
